# FASCICULE DE BREVET EUROPEEN

(11) **EP 1 002 467 B1**
(45) Date de publication et mention de la délivrance du brevet: **17.12.2003**
(21) Numéro de dépôt: 99440272.5
(22) Date de dépôt: 07.10.1999
(51) Int. Cl.: A23N 15/02

(54) **Machine destinee notamment a egrener les grains de raisin avant sa vinification**
Vorrichtung zum abbeeren vonTrauben vor der Weinherstellung
Machine for stemming grapes before making wine

(30) Priorité: 07.10.1998 FR 9812642
(43) Date de publication de la demande: 24.05.2000
(73) Titulaire: SOCIETE OCCITANE DE MAINTANCE - SOCMA, 11100 Narbonne (FR)
(72) Inventeur: Ferrandez, Joseph, 11100 Narbonne (FR)
(74) Mandataire: Rhein, Alain

(56) Documents cités:
- FR-A- 2 552 978
- PATENT ABSTRACTS OF JAPAN vol. 097, no. 003, 31 mars 1997 (1997-03-31) & JP 08 308547 A (YAMASHITA HIROSHI), 26 novembre 1996 (1996-11-26)

## Description

La présente invention a pour objet une machine d'égrenage destinée notamment à égrener les grains de raisin avant la vinification du raisin.

La recherche de qualité en matière de vinification demande d'effectuer des opérations de nettoyage qui consiste, après la récolte des raisins, à enlever les rafles, les feuilles et autres débris, manuellement ou mécaniquement, de manière à amener uniquement les grains de raisin dans les cuves de vinification.

Les machines actuelles permettant de séparer automatiquement les grains de raisins de la rafle sont constituées d'un bac de réception de la vendange à nettoyer qui est disposé au dessus d'une enceinte fermée par un capot et qui renferme d'une part une cage cylindrique métallique perforée et mue en rotation autour de son axe et d'autre part, dans ladite cage, un axe, coaxial à cette dernière, supportant des doigts d'égrenage s'étendant radialement de celui-ci et mu en rotation de manière à former un batteur ou hérisson. Une telle machine est décrite par exemple dans FR-A-2 552 978.

Le fonctionnement de ces machines est le suivant: la vendange est placée dans le bac de réception servant à alimenter, au moyen d'une vis d'alimentation, la cage dont la rotation, combinée avec la rotation du hérisson, provoque la séparation des grains de raisins de la rafle. Ces derniers sont ensuite évacués de la cage en passant au travers de ses orifices, tandis que les autres matières solides, indésirables pour la vinification, s'accumulent à l'une des extrémités de la cage où elles sont évacuées.

Toutefois dans ces machines les petites tiges et autres débris de feuilles ou de rafles passent également au travers des orifices de la cage ce qui entraîne des problèmes oenologiques en altérant la qualité de la matière vinifiée. En outre les rafles et autres débris doivent être extraits au moyen de systèmes complexes augmentant le coût de revient de la machine. D'autre part les grains de raisin sont fréquemment détériorés par la vis d'alimentation, et subissent différents chocs avant d'être évacués.

La présente invention a pour but de remédier à ces inconvénients en proposant une machine de séparation des grains de raisin avant sa vinification améliorant le nettoyage de la vendange et d'un coût de revient inférieur à celui des machines actuels.

La machine selon l'invention se caractérise essentiellement en ce qu'elle comprend un tamis plan apte à laisser passer uniquement les jus et les grains de raisin, et au moins un hérisson mû en rotation axiale associé audit tamis et animé par rapport à ce dernier d'un mouvement relatif de translation dans une direction parallèle audit tamis permettant de séparer les grains de la rafle par un effet d'éjection.

Dans un mode de réalisation préférentiel de l'invention la tamis est sans fin et est tendu entre des galets d'entraînement dudit tamis, le brin actif de ce dernier destiné à recevoir la vendange en vue de son nettoyage, étant horizontal ou incliné et le hérisson étant disposé transversalement au sens d'avancement dudit brin actif et situé à une distance déterminée de ce dernier.

Selon une autre caractéristique additionnelle de l'invention les doigts d'égrenage du hérisson sont réalisés en un matériau présentant une certaine élasticité.

Selon une autre caractéristique additionnelle de l'invention les doigts d'égrenage sont susceptibles de venir en contact avec la partie active du tamis ou à proximité de cette dernière.

Le tamis sans fin selon l'invention peut être réalisé à partir d'un tapis perforé ou à partir d'un assemblage de maillons, dont les orifices du tapis ou les mailles sont de dimensions légèrement supérieures à celles des grains de raisin.

Selon une autre caractéristique additionnelle de l'invention le tamis est tendue d'une part entre deux galets supérieurs formant le brin actif et d'autre part entre deux galets inférieurs formant le brin de retour.

Selon une autre caractéristique additionnelle de l'invention le brin de retour du tamis passe dans un bac contenant un produit de nettoyage du tamis additionné ou non d'un produit aseptique.

Selon une autre caractéristique additionnelle de l'invention les doigts d'égrenage sont pliés, à leur extrémité, dans le sens de rotation du hérisson.

La machine peut comprendre un moyen de vibration permettant de récupérer, préalablement, les grains faiblement attachés ou déjà séparés de la râfle.

Les avantages et les caractéristiques de la présente invention ressortiront plus clairement de la description qui suit et qui se rapporte au dessin annexé, fourni à titre de simple illustration de l'invention, vis-à-vis de laquelle il ne présente aucun caractère limitatif.

Dans le dessin annexé:
- la figure 1 représente une vue en perspective d'une machine selon l'invention dans un mode de réalisation préférentiel.
- la figure 2 représente une vue de détail du tamis et d'un hérisson en fonctionnement.
- la figure 3 représente une vue en coupe longitudinale schématique de la machine de la figure 1.

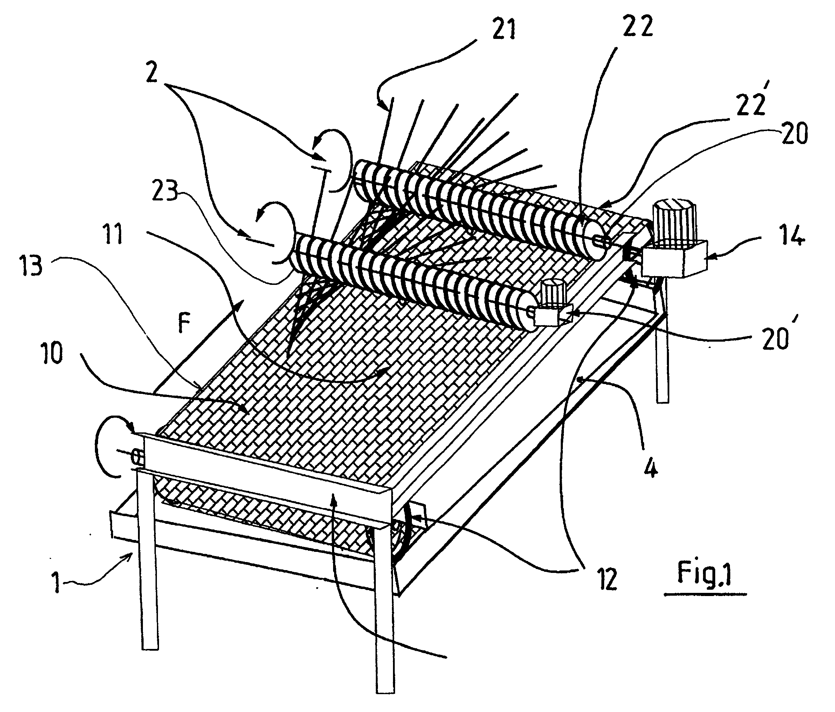

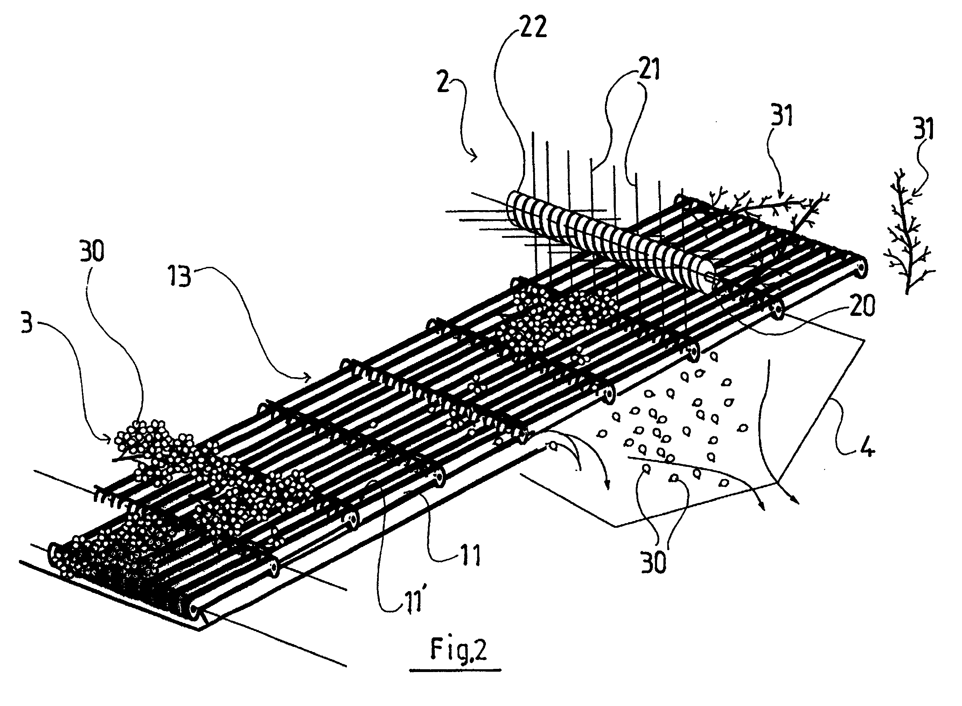

Si on se réfère aux figures 1 et 2 on peut voir qu'une machine selon l'invention est constitué d'un châssis 1 supportant un tamis plan sans fin 10, réalisé à partir d'un assemblage de maillons 11, réalisés de préférence en matière plastique, lequel tamis est tendu au moyen de galets 12 de manière à former un brin actif horizontale 13 destiné à recevoir la vendange 3 à nettoyer. Un moteur d'entraînement 14 assure le déplacement en translation du tamis 10 par l'intermédiaire d'un galet 12.

On peut voir également deux hérissons 2, dont un seul est représenté sur la figure 2, dont l'axe 20, porteur de doigts radiaux d'égrenage 21, est disposé au dessus du tamis 10, transversalement à son sens de défilement F, et est entraîné en rotation au moyen d'un moteur 20' , dont un seul est représenté sur la figure.

D'autre part on peut voir que l'un 22 des deux hérissons 2 est situé non loin de l'extrémité aval 22' de la machine, tandis que l'autre 23 est situé sensiblement au dessus de la partie centrale du brin actif 13.

Les dimensions des mailles 11' du tamis 10 sont déterminées de manière que seuls les grains de raisin 30 puissent passer à travers le tamis 10, comme on peut le voir sur la figure 2.

Les grains 30 qui passent à travers le brin actif 13 du tamis 10 sont récupérés, ainsi que le jus de raisin, non représenté, dans un bac de récupération 4.

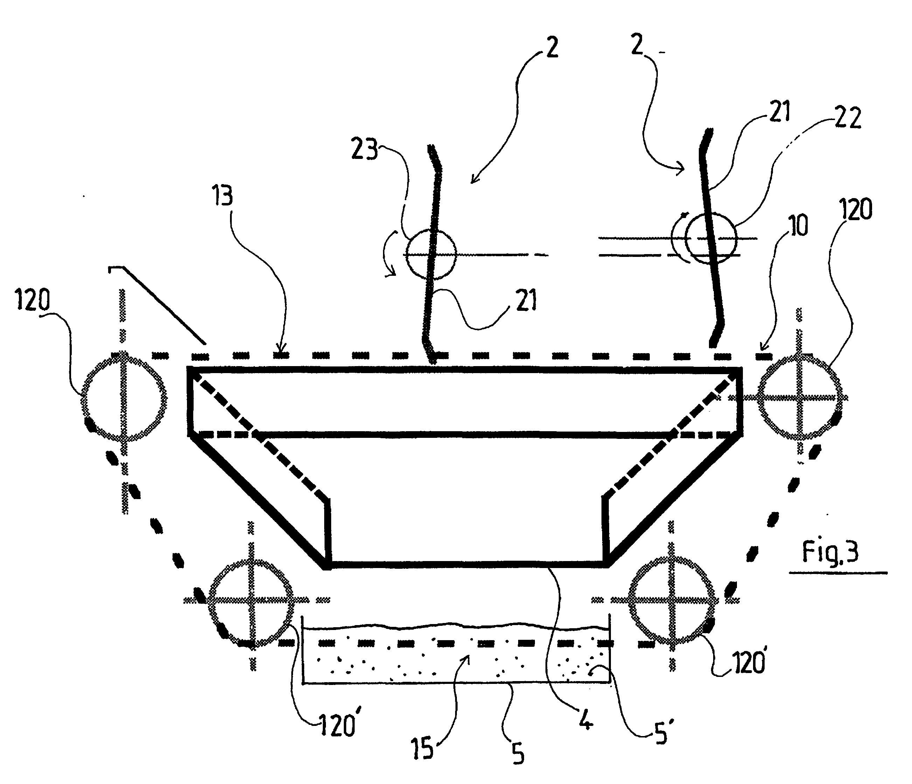

Sur la figure 3 on peut voir que le tamis 10 est tendu entre deux galets supérieurs 120 formant le brin actif 13 et deux galets inférieurs 120' définissant un brin de retour 15 passant sous le bac 4, et dans un bac de rinçage 5, pouvant contenir un produit aseptique 5', pour le nettoyage du tamis 10.

Les doigts d'egrenage 21 des hérissons 2 sont réalisés de préférence dans un matériau leur procurant une certaine élasticité et sont susceptibles de venir en contact avec la surface supérieure du brin actif 13 du tamis 10.

Ainsi, au cours de leur rotation, les doigts 21 viennent en contact avec le brin actif 13 du tamis 10 en amenant avec eux les rafles 31 des grappes de raisin 32 encore intactes ce qui a pour effet, lorsque les doigts 21 quittent la surface du tamis 10 de générer, grâce à leur élasticité, une projection de la rafle 31 vers la partie aval ou amont de la machine, suivant le sens de rotation d'un hérisson 2. Du fait de la puissance de cette projection et de l'inertie des grains 30, ceux-ci se détachent de la rafle 31 et passent au travers du tamis 10 par les mailles 11 et tombent, par gravitation, dans le bac de réception 4.

De manière à optimiser le travail des doigts 21 leur extrémité est pliée dans le sens de rotation des hérissons.

On peut voir également sur la figure 3 que, dans une cinématique particulière de la rotation des hérissons 2, le hérisson central 22 tourne dans le sens inverse du tamis 10 tandis que l'autre hérisson 23 tourne dans le même sens que le sens d'avancement du tamis 10.

On notera que les hérissons 2 peuvent également être positionnés de manière que l'extrémité des doigts 21 ne vienne pas en contact avec le tamis 10, dans ce cas la différence de vitesse de déplacement entre ce dernier et les extrémités des doigts 21 sera déterminée pour assurer un égrenage efficace.

La matière herbacée indésirable, qui ne peut passer à travers la maille 11, demeure sur le tamis 10 jusqu'à ce qu'elle arrive à son extrémité aval où elle est évacuée par gravité ou par tout autre moyen permettant d'éjecter cette matière tel que par exemple un aspirateur.

La vitesse de déplacement de l'extrémité des doigts d'égrenage 21 sera de préférence supérieure à la vitesse de déplacement du tamis 10.

D'autre part les hérissons 2 pourront être équipés de moyens de réglage de leur position par rapport au brin actif 13 du tamis 10.

La longueur du brin actif 14 pourra être défini de manière à avoir une longueur suffisante pour que la partie amont recevant la vendange puisse être transformée en table de tri.

La machine pourra est construite de manière à s'adapter sur une machine à vendanger de manière à pouvoir traiter la matière avant son arriver dans les bacs de cette dernière.

Enfin, la machine pourrait comporter en amont du tamis 10 un tapis vibrant permettant de récupérer dans le bac de réception, préalablement, à leur égrenage par les hérissons 2 des grains faiblement attachés ou déjà séparés de leur rafle de manière à ne pas encombrer les hérissons et améliorer ainsi le rendement de la machine.

## Revendications

1. Machine destinée notamment à égrener les grains de raisin avant sa vinification **caractérisée en ce qu'**elle comprend un tamis plan (10) apte à laisser passer uniquement les jus et les grains de raisin (30), et au moins un hérisson (2) mû en rotation axiale du type comprenant des doigts d'égrenage (21) et associé audit tamis (10) et animé par rapport à ce dernier d'un mouvement relatif de translation dans une direction (F) parallèle audit tapis (10) permettant de séparer les grains (30) de la rafle (31) par un effet d'éjection.

2. Machine selon la revendication 1 **caractérisée en ce que** le tamis (10) est sans fin et est tendu entre des galets d'entraînement (12) dudit tamis (10), et **en ce que** d'une part le brin actif (13) de ce dernier, destiné à recevoir la vendange en vue de son nettoyage, est horizontal ou incliné et d'autre part le hérisson (2) est disposé transversalement au sens d'avancement dudit brin actif (13) et est situé à une distance déterminée au-dessus de ce dernier.

3. Machine selon la revendication 1 ou 2 **caractérisée en ce que** les doigts d'égrenage (21) du hérisson (2) sont réalisés en un matériau présentant une certaine élasticité.

4. Machine selon l'une quelconque des revendications précédentes **caractérisée en ce que** les doigts d'égrenage (21) sont susceptibles de venir en contact avec la partie active du tamis (10) ou à proximité de cette dernière.

5. Machine selon l'une quelconque des revendications 2 à 4 **caractérisée en ce que** le tamis sans fin (10) est réalisé à partir d'un tapis perforé ou à partir d'un assemblage de maillons.

6. Machine selon l'une quelconque des revendications 2 à 5 **caractérisée en ce que** le tamis (10) est tendu d'une part entre deux galets supérieurs (120) formant le brin actif (13) et d'autre part en deux galets inférieurs (120') formant le brin de retour (15) qui passe dans un bac de rinçage (5) contenant un produit de nettoyage du tamis additionné ou non d'un produit aseptique.

7. Machine selon l'une quelconque des revendications 2 à 6 **caractérisée en ce qu'**elle comprend deux hérissons (22, 23) tournant en sens inverse.

8. Machine selon l'une quelconque des revendications précédentes **caractérisée en ce que** les doigts d'égrenage (21) sont pliés à leur extrémité dans le sens de rotation du hérisson (2) correspondant.

9. Machine selon l'une quelconque des revendications précédentes **caractérisée en ce qu'**elle comprend en amont du tamis (10) un moyen de vibration permettant de récupérer, préalablement, les grains faiblement attachés ou déjà séparés de la rafle.

## Patentansprüche

1. Maschine insbesondere zum Abbeeren von Trauben vor der Weinherstellung, **dadurch gekennzeichnet, daß** sie ein flaches Sieb (10), geeignet, nur die Säfte und die Traubenbeeren (30) übergehen zu lassen, und wenigstens eine axial in Drehung getriebene Stachelwalze (2) der Art umfassend Abbeerfinger (21) und dem besagten Sieb (10) zugeordnet und getrieben hinsichtlich des letzteren in eine relative Translationsbewegung in eine Richtung (F), die parallel zum Sieb (10) ist, erlaubend, die Traubenbeeren (30) von dem Traubenstiel (31) durch eine Ausstoßwirkung zu trennen, umfaßt.

2. Maschine nach Anspruch 1, **dadurch gekennzeichnet, daß** das Sieb (10) endlos ist und zwischen Antriebsrollen (12) des besagten Siebes (10) gespannt ist, sowie daß, einerseits, das aktive Trum (13) dieses letzteren, vorgesehen, die Weinernte zwecks ihrer Reinigung aufzunehmen, horizontal oder geneigt ist, und, andererseits, daß die Stachelwalze (2) quer zu der Richtung der Vorwärtsbewegung des besagten aktiven Trums (13) angeordnet ist und sich in einer bestimmten Entfernung über diesem letzteren befindet.

3. Maschine nach Anspruch 1 oder 2, **dadurch gekennzeichnet, daß** die Abbeerfinger (21) der Stachelwalze (2) aus einem Material hergestellt sind, das eine gewisse Elastizität aufweist.

4. Maschine nach irgendeinem der vorgehenden Ansprüche, **dadurch gekennzeichnet, daß** die Abbeerfinger (21) geeignet sind, mit dem aktiven Teil des Siebes (10) oder in der Nähe dieses letzteren in Berührung zu kommen.

5. Maschine nach irgendeinem der Ansprüche 2 bis 4, **dadurch gekennzeichnet, daß** das endlose Sieb (10) ab einem durchlochten Band oder ab einer Zusammenfügung aus Kettengliedern ausgeführt ist.

6. Maschine nach irgendeinem der Ansprüche 2 bis 5, **dadurch gekennzeichnet, daß** das Sieb (10), einerseits, zwischen zwei oberen Rollen (120), die das aktive Trum (13) bilden, und, andererseits, in zwei unteren Rollen (120') gespannt ist, die das Rücklauftrum (15) bilden, welches durch einen Spülbehälter (5) übergeht, der ein Mittel zur Reinigung des Siebes mit einem hinzugefügten oder nicht hinzugefügten aseptischen Produkt enthält.

7. Maschine nach irgendeinem der Ansprüche 2 bis 6, **dadurch gekennzeichnet, daß** sie zwei Stachelwalzen (22, 23) umfaßt, die sich in umgekehrter Richtung drehen.

8. Maschine nach irgendeinem der vorgehenden Ansprüche, **dadurch gekennzeichnet, daß** die Abbeerfinger (21) an ihren Enden in der Richtung der Drehung der entsprechenden Stachelwalze (2) gefaltet sind.

9. Machine nach irgendeinem der vorgehenden Ansprüche, **dadurch gekennzeichnet, daß** sie oberhalb des Siebes (10) ein Vibrationsmittel umfaßt, erlaubend, zuvor die schwach befestigten oder die schon von dem Traubenstiel getrennten Beeren zurückzugewinnen.

## Claims

1. Machine namely for picking off the grapes before vinification, **characterised in that** it includes a flat sieve (10) capable of letting through only the juice and the grapes (30), and at least one rotary brush (2) driven in axial rotation of the type including gear catches (21) and associated with said sieve (10) and movable with respect to the latter according to a relative translation motion in a direction (F) parallel to said sieve (10) allowing separating the grapes (30) from the bush (31) through an ejection effect.

2. Machine according to claim 1, **characterised in that** the sieve (10) is an endless sieve and is stretched between rail-wheels (12) for driving said sieve (10), and **in that**, on the one hand, the active side (13) of the latter, aimed at receiving the crops of grapes with a view to their cleaning, is horizontal or slanted and, on the other hand, the rotary brush (2) is transversally arranged with respect to the direction of progress of said active side (13) and is located at a determined distance above the latter.

3. Machine according to claim 1 or 2, **characterised in that** the gear catches (21) of the rotary brush (2) are made of a material having a determined elasticity.

4. Machine according to any of the preceding claims, **characterised in that** the gear catches (21) are capable of entering into contact with the active portion of the sieve (10) or in the vicinity of the latter.

5. Machine according to any of claims 2 to 4, **characterised in that** the endless sieve (10) is made from a perforated belt or from an assembly of links.

6. Machine according to any of claims 2 to 5, **characterised in that** the sieve (10) is stretched, on the one hand, between to upper rail-wheels (120) forming the active side (13) and, on the other hand, between two lower rail-wheels (120) forming the return side (15) that passes through a rinsing trough (5) containing a washing product for the sieve, with or without addition of an aseptic product.

7. Machine according to any of claims 2 to 6, **characterised in that** it comprises two rotary brushes (22, 23) that rotate in opposite direction.

8. Machine according to any of the preceding claims, **characterised in that** the gear catches (21) are bent at their end in the direction of rotation of the corresponding rotary brush (2).

9. Machine according to any of the preceding claims, **characterised in that** it includes, downstream of the sieve (10), vibration means allowing to previously recover the grapes that are slightly attached to or already separated from the bush.
